(19) Europäisches Patentamt
European Patent Office
Office européen des brevets

(11) **EP 4 361 720 A1**

(12) **EUROPEAN PATENT APPLICATION**

(43) Date of publication:
**01.05.2024 Bulletin 2024/18**

(21) Application number: **22204506.4**

(22) Date of filing: **28.10.2022**

(51) International Patent Classification (IPC):
**G02F 1/355** (2006.01)

(52) Cooperative Patent Classification (CPC):
**G02F 1/3558**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Vilnius University**
**01513 Vilnius (LT)**

(72) Inventors:
• **Vengelis, Julius**
  **Vilnius (LT)**
• **Banys, Jonas**
  **Vilnius (LT)**
• **Pimp , Jok bas**
  **Vilnius (LT)**

(74) Representative: **Pakeniene, Ausra**
**AAA Law**
**A. Gostauto street 40B**
**03163 Vilnius (LT)**

(54) **METHOD FOR ESTIMATION OF CRYSTAL PERIODIC POLING QUALITY**

(57) A non-destructive method for estimation of periodically poled crystal poling quality in the whole crystal volume, at small periods, such as significantly smaller than 10 μm, with high precision at periods equal or less than periods of poling of the periodically poled crystal using a nonlinear process based periodic poling quality measurement setup. The method is also applicable to fan-out type periodically poled crystals to estimate periodic poling quality in the whole volume where poling period should be equal.

Fig. 4a

**Description**

TECHNICAL FIELD

The invention relates to methods of estimation of properties of periodically poled crystals, in particular to a method for estimation of periodically poled crystal poling quality in whole crystal volume.

BACKGROUND ART

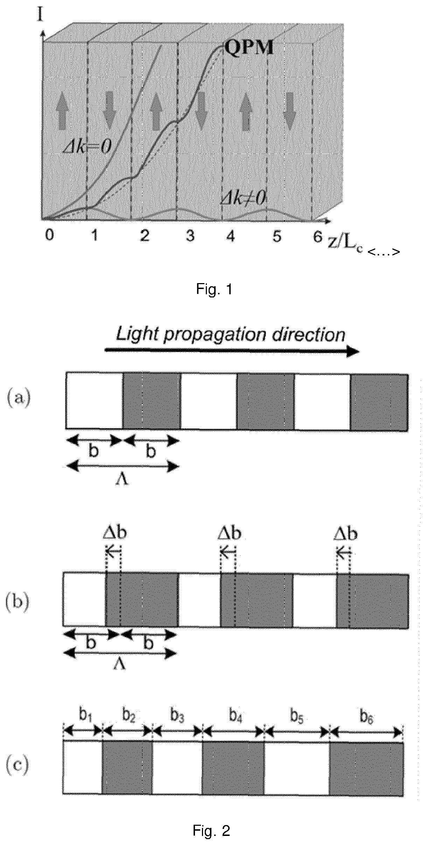

Periodically poled crystals have received great scientific and commercial interest as these materials are important in nonlinear optics [1]. Quasi-phase matching (QPM) was successfully realized in ferroelectric crystals such as lithium niobate (LiNbO3), lithium tantalate (LiTaO3) and potassium titanyl phosphate (KTiOPO4). These crystals are widely used for very efficient parametric light generation, second harmonic generation and THz radiation generation [2, 3, 4, 5, 6]. In periodically poled crystals the optical axis is inverted after each coherence length $L_c = 2/\Delta k$ throughout the entire length of the crystal (Fig.1).
In such way a medium, where effective nonlinearity $d_{eff}$, periodically changes its sign to the opposite, is created [7]:

$$d_{n,eff} = (-1)^{n-1} d_{eff} , \qquad (1)$$

here $d_{n,eff}$ is the effective nonlinearity of the n-th layer. The generated wave intensity increases within distance $L_c$ and at the next domain the optical axis is inverted thus changing the phase of the wave which results in further growth of the generated wave intensity (Fig.1). Such periodic structures (in the literature commonly called gratings) are used to compensate phase mismatch between interacting waves. The grating period is expressed as [7]:

$$\Lambda = 2L_c = \frac{2\pi}{k_1 + k_2 - k_3} , \qquad (2)$$

where $k_1$, $k_2$, $k_3$ are wavenumbers of interacting waves. In such a way, phases of interacting waves are matched throughout the entire length of the crystal and a very efficient nonlinear interaction can occur because QPM enables interactions via the largest nonlinear optical susceptibility tensor elements (e.g., e-ee interaction).
Periodically poled lithium niobate is one of the most widely used nonlinear crystals for QPM. It is a ferroelectric crystal which means that it has intrinsic polarization (characterized by polarization hysteresis) in each domain. Raw lithium niobate crystal is usually periodically poled by applying a strong electric field. A simplified procedure of periodic poling via application of strong electric field is as follows [8]:

1. Preparation of substrate - standard optical quality crystal plate (e.g., lithium niobate);
2. The Z+ crystal surface is covered with a thin photoresist layer and a mask corresponding to the desired periodic structure is applied;
3. Lithography and consequent photoresist etching. The result is domains covered with photoresist that will remain not inverted;
4. The exposed areas are in contact with liquid electrolyte made of saturated lithium chloride solution in deionized water. Not exposed areas are separated from the liquid electrolyte;
5. A high voltage pulse is applied. The electric field strength necessary for domain inversion has to be greater than coercive field strength which is usually very high e.g., $\approx$22 kV/m in case of lithium niobate crystal. The high voltage is applied for a few milliseconds which is enough to form stable periodically poled domains;
6. Final processing of the crystal: cutting, polishing, etching, application of optical coatings.

Although there are alternative ferroelectric crystal poling techniques (described in [9]), periodic poling using electric field is currently the most reliable method [10]. Despite this, periodic poling is a nontrivial process and actually quite complicated. Because the electric field necessary for domain inversion is very strong, it has to be applied very cautiously and in a controlled manner to avoid discharge in air and crystal damage. Problems arise when periodically poling thick crystals (thicker than 0.5 mm) due to limited electric field penetration into the crystal volume which sometimes results in poor crystal poling quality farther away from the electrodes. This is solved by using media with lower coercive field strength e.g., stoichiometric lithium niobate. The next challenge is about achieving high periodic poling quality at small periods (significantly less than 10 $\mu$m) which are necessary to convert light with wavelength in the visible spectrum range.

It is important to note periodic poling conditions have to be optimized for each nonlinear crystal type: this can include crystal surface preparation, selection of electrode material and their production details, shape and duration of applied high voltage pulses (usually controlled by observing voltage or current in real-time) and selection of temperature before and during the periodic poling process[11].

Because periodic poling is a complicated process, mistakes and consequent quality issues are unavoidable. The main criteria for defining periodic poling quality are:

1. Uniformity of domain period;
2. 50/50 domain duty cycle;
3. Homogeneity of 1. and 2. in the whole grating volume;
4. Poling defects.

Periodically poled crystals manufactured using electric field poling technique are quite resistant to grating period error because it is set by lithographically defined electrodes, therefore, duty cycle error, domain defects, and inhomogeneity in the grating volume are the main factors limiting QPM device operation [12]. The net parametric light generation increment decrease $\eta_d$ due to duty cycle error is defined as [13]

$$\eta_d = \sin^2\left(\pi n D\right)\left(1 - \left(\frac{\pi^2}{2}\right)\left(\frac{\sigma_l}{L_c}\right)\right), \qquad (3)$$

here D is the average duty cycle, n is the QPM order, $\sigma_l$ is the domain width variation and $L_c$ is the coherence length. The highest conversion efficiency is achieved at 50/50 domain duty cycle and any discrepancies from this value result in reduction of conversion efficiency. The main factors influencing duty cycle errors are substrate inhomogeneity and the lithographic process [12]. Domain inhomogeneity can also cause lower signal wave beam quality [14]. To sum up, in order to ensure maximum generated light conversion efficiency in QPM based materials, it is necessary to estimate periodic poling quality.

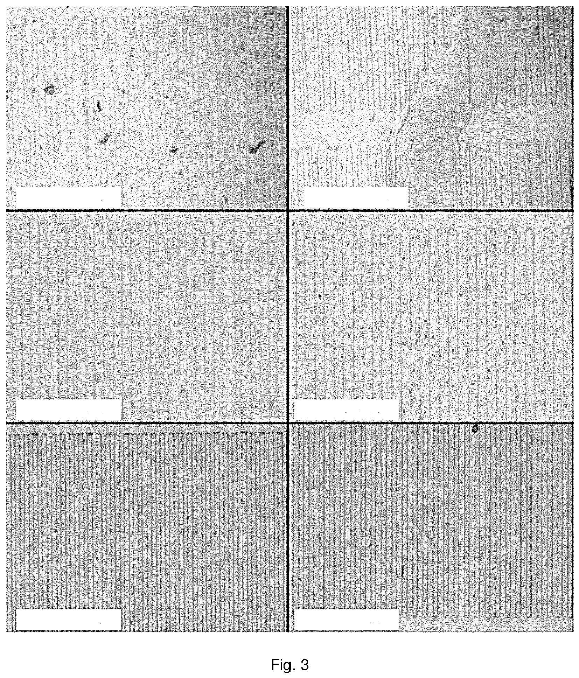

There are several ways to visualize domain structures e.g., second harmonic generation microscopy, confocal microscopy, scanning electron microscopy or near-field microscopy [12]. An example of bright-field microscopy images of the investigated PPLN crystal is shown in Fig.3. Various microscopy techniques are a way to visualize periodically poled structures, but they take up a lot of time and allow only very small domain structure parts to be investigated, thus do not provide a way to estimate quantitatively the poling quality in the crystal volume.

As an alternative, diffraction-based methods are used to estimate poling quality. Information about the domain duty cycle can be obtained by measuring far-field diffraction order light from surface etched PPLN crystal [10]. Domain duty cycle can also be evaluated when investigating refractive index modulation in MgO:PPLN crystal and using diffraction techniques [11, 15]. Muller et al. showed that by applying a weak electric field to the PPLN crystal and exposing it to Ar+ laser light we can obtain non-trivial diffraction patterns carrying information about domain period, duty cycle, and homogeneity [1]. Diffraction techniques, although seemingly simple and fast, have drawbacks (sources for errors) due to imaging lens aberration (which is unavoidable and increases for larger imaging areas), CCD camera sensitivity and the averaging effect (inhomogeneity of the imaging laser beam). All of these factors can change diffraction patter intensities.

Two dimensional scans of periodically poled crystals were previously performed utilizing optical parametric generation, but they were demonstrated only in a multi-pass system (resonator) and the scanning step was coarse providing only a poor resolution view of domain homogeneity [16, 17]. The reported experiments in which periodically poled crystals were moved inside the cavity, in addition to the aforementioned poor resolution problem, also have significant drawbacks (sources for measurement error) due to aberrations in the cavity and periodically poled crystal shape imperfections (surface parallelism and crystal thickness is not perfect). Moreover, fan-out type periodically poled crystals have not been investigated using diffraction or scanning in resonator techniques. This is because diffraction pattern from a fan-out type crystal is too difficult to interpret and the fan-out type crystals have been introduced relatively recently.

The present invention is dedicated to overcoming of the above shortcomings and for producing further advantages over prior art.

SUMMARY OF THE INVENTION

The invention discloses a non-destructive method for estimation of periodically poled crystal poling quality in the whole crystal volume at small periods, such as significantly smaller than 10 $\mu$m with high precision.

The method comprises translating a periodically poled crystal in direction perpendicular to a pump laser beam direction at periods equal or less than periods of poling of the periodically poled crystal and measuring output light generated during nonlinear process (second harmonic generation, parametric generation, etc.) in the periodically poled crystal in a single pass optical setup.

The setup comprises a crystal optical mount with heat insulation capability for maintaining constant temperature; oven for crystal heating; rotation stage for precise crystal positioning perpendicular to laser beam propagation direction; incoming pump laser beam; focusing lens or any other analogous optical system; nonlinear interaction laser radiation, e.g., second harmonic radiation, etc.; optical filter which removes remaining pump radiation; computer for data acquisition, processing and display.

The method comprises focusing the pump laser beam radiation into the periodically poled crystal using such means as a lens or curved mirror; determining aperture limits of a single crystal grating; selecting scanning step for two scanning directions, X and Y, perpendicular to the pump beam propagation direction; translating a periodically poled crystal in both directions, perpendicular to the pump beam propagation direction; processing the obtained data by normalizing each scanning matrix point to maximum nonlinear process light output power and visualized in a 2D intensity map.

The measuring phase and processing phase are repeated for each available grating in the investigated crystal to obtain data about each crystal grating.

In case of a *fan-out* type periodically poled crystal, the method allows to estimate periodic poling quality in the whole volume where poling period should be equal: a single scanning direction.

Output power changes at each crystal entrance aperture point and related to generated signal power are observed. Obtained poling quality homogeneity "map" directly corresponds to domain homogeneity and estimated nonlinear interaction efficiency throughout the whole crystal volume and for all crystal gratings. During the measurement pump power and crystal temperature are constant.

BRIEF DESCRIPTION OF THE DRAWINGS

Features of the invention believed to be novel and inventive are set forth with particularity in the appended claims. The invention itself, however, may be best understood by reference to the following detailed description of the invention, which describes exemplary embodiments, given in non-restrictive examples, of the invention, taken in conjunction with the accompanying drawings, in which:

Fig. 1      shows evolution of generated wave intensity *I* in case of perfect phase matching ($\varDelta k = 0$), large phase mismatch ($\varDelta kl = 0$) and quasi-phase matching (QPM). Arrows indicate direction of domain optical axis, *z* - propagation distance, $L_c$ - coherence length.

Fig. 2      shows principal diagram of a single periodically poled crystal grating. White and blue areas depict inverted and uninverted domains. (a): Ideal domain structure with 50/50 duty cycle, (b): duty cycle error, (c): period error.

Fig. 3      shows microscope images of different thickness (specified on the bottom left side of each image) multi-period MgO:PPLN domains.

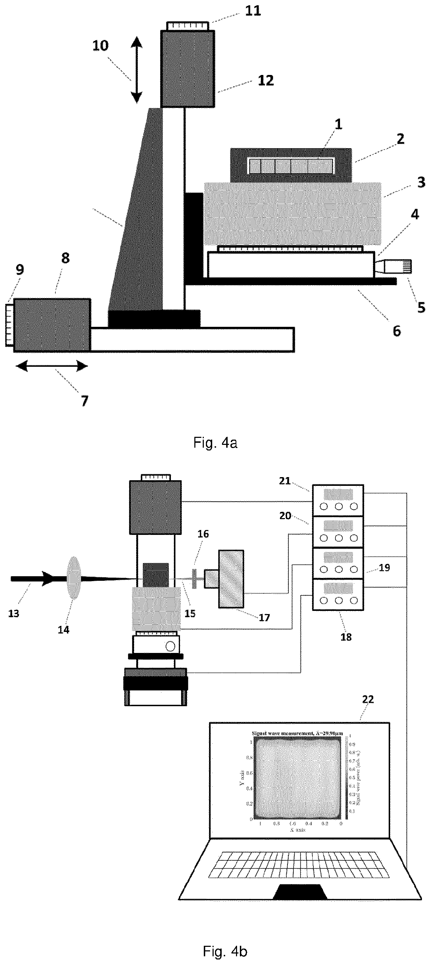

Fig. 4      shows principal schematic view of the periodic poling quality measurement setup: a) front view, b) side view.

Fig. 5      shows signal wave average power distribution (normalized to maximum value in each grating) at various periods ($\Lambda$) gratings in transverse coordinates of the 2 cm thick PPLN crystal.

Fig. 6      shows signal wave average power distribution (normalized to maximum value in each grating) at various periods ($\Lambda$) gratings in transverse coordinates of the 1 cm thick PPLN crystal.

Fig. 7      shows signal wave average power distribution (normalized to maximum value in each grating) at various periods ($\Lambda$) gratings in transverse coordinates of the 5 cm thick MgO:PPLN crystal.

Fig. 8      shows periodic poling quality parameter $\eta_{0.5}$ dependence on crystal grating period. The green part marks the area where $\eta_{0.5} \geq 80\%$ which we consider as "good" periodic poling quality zone.

Fig. 9      shows (a): microscope image of fan-out type MgO:PPLN crystal indicating fan-out type domains; (b): signal wave average power distribution (normalized to maximum value) in transverse coordinates of the fan-out type MgO:PPLN crystal. Dashed lines indicate examples of regions where crystal poling period should be constant: with the proposed method we can evaluate poling quality in the shown direction.

Preferred embodiments of the invention will be described herein below with reference to the drawings. Each figure contains the same numbering for the same or equivalent element.

DETAILED DESCRIPTION OF THE INVENTION

It should be understood that numerous specific details are presented in order to provide a complete and comprehensible description of the invention embodiment. However, the person skilled in art will understand that the embodiment examples do not limit the application of the invention which can be implemented without these specific instructions. Well-known methods, procedures and components have not been described in detail for the embodiment to avoid misleading. Furthermore, this description should not be considered to be constraining the invention to given embodiment examples but only as one of possible implementations of the invention.

The invention discloses a non-destructive method for estimation of periodically poled crystal poling quality in the whole crystal volume, at small periods, such as significantly smaller than 10 μm, with high precision at periods equal or less than periods of poling of the periodically poled crystal using a nonlinear process based periodic poling quality measurement setup.

The periodic poling quality measurement setup comprises:

a periodically poled crystal (1);
optical mount (2) for the crystal (1), where the optical mount (2) comprises heat insulation for maintaining constant temperature of the crystal (1);
oven (3) for crystal (1) heating;
precision rotation stage (4) (at least 1 arcmin resolution) for precise positioning of the crystal (1), perpendicular to laser beam (13) propagation direction;
knob (5) for adjusting position of the rotation stage (4);
mounting base (6) of the rotation stage (4);
a horizontal precision translation stage (at least 2.5 micrometer resolution in full step) (8) for horizontal motion (7);
a knob (9) for the horizontal translation stage (8) for manual operation;
a vertical precision translation stage (at least 2.5 micrometer resolution in full step) (12) for vertical motion (10);
a knob (11) for adjusting position of vertical translation stage (12) for manual operation;
an incoming pump laser beam (13);
focusing lens (14) or other analogous optical means;
output laser radiation (15), generated via nonlinear interaction (e.g., second harmonic radiation, etc.) emitted from the crystal (1);
optical filter (16) for removing remaining pump laser beam (13) radiation optical power meter (17);
digital controller (18) of the horizontal translation stage (8);
digital controller (19) of the crystal oven;
digital controller (20) of the optical power meter (17);
digital controller (21) of the vertical translation stage (12);
general purpose computer (22) for data acquisition, processing and display.

The method comprises translation of the crystal (1) in direction perpendicular to pump beam (13) direction and measurement of light (15) generated during nonlinear process (second harmonic generation, parametric generation, etc.) in the periodically poled crystal (1) in a single pass optical setup. The setup is automated by using motorized precision translation stages (8, 12) and software to control data acquisition, processing and display measurement results. Changes at each crystal (1) entrance aperture point and related to generated signal power are observed. Obtained poling quality "map" homogeneity directly corresponds to domain homogeneity and estimated nonlinear interaction efficiency throughout the whole crystal (1) volume and for all crystal (1) gratings (when measurements are performed in each crystal grating). During the measurement pump power and crystal (1) temperature are constant.

In particular, embodiment of the invention the method for estimation of periodically poled crystal poling quality in the whole crystal volume comprises:

The procedure of the proposed method is as follows:

- providing a periodically poled crystal (1) in the optical mount (2) having heat insulation and maintaining constant temperature of the crystal (1);
- heating the optical mount (2) with the periodically poled crystal (1) using the underneath positioned oven (3). This is necessary for certain periodically poled crystals to maximize nonlinear interaction efficiency and prevent laser induced damage
- providing the pump laser beam (13) on the crystal (1) surface, where the laser beam (13) diameter and power are sufficient to generate light via the chosen nonlinear interaction, but not exceeding laser induced damage threshold of the investigated periodically poled crystal (1), is set using a telescope and an attenuator or any other preferred optical system, where the beam (13 diameter and power are set using a telescope and an attenuator or any other preferred optical system;

- focusing pump laser beam (13) into the investigated periodically poled crystal (1) using a lens (14) or curved mirror;
- determining aperture limits of a single crystal grating, i.e., grating edges where nonlinear process no longer occurs are determined. In such way the area (scanning matrix) where the scan will be performed is defined;
- selecting a scanning step in the defined area as determined by aperture limits of a single crystal grating for both scanning directions, perpendicular to the pump beam propagation direction.

Scanning step is chosen such that it would be smaller than the focused beam (13) diameter and adjacent scanning points would partially overlap, >50% overlap;

- translating the periodically poled crystal (1) in both directions (7) and (10) perpendicular to the pump beam (13) propagation direction at a reduced step size, preferably of 10 micrometers or less, using precision translation stages (8) and (12) where we place the crystal before the measurement procedure. At each scanning matrix point average power of light generated during the nonlinear process, e.g., second harmonic generation or optical parametric generation, is measured using a power meter. The measurements are repeated for each different period ($\Lambda$) grating and average power is normalized to maximum value in each grating.
- the obtained data is processed, where each scanning matrix point is normalized to maximum nonlinear process light output power and visualized in a 2D intensity map separately for each period grating. The maps depict periodic poling quality, i.e. homogeneity, in the whole volume at each coordinate in each grating of the investigated crystal.

The whole process is automated using motorized translation stages (8, 12) and software, such as LabVIEW VI, that connects them with the power meter and processes the measurement data. Measurements are repeated for each available grating in the investigated crystal (1) to obtain data about each crystal grating.

In case of a *fan-out* type periodically poled crystal, the proposed method allows to estimate periodic poling quality in the whole volume where poling period should be equal: a single scanning direction.

The nonlinear interaction means any three-wave nonlinear interaction which is possible in the given crystal, and which requires phase-matching condition to be satisfied for efficient interaction to occur.

The peak intensity of pump radiation during crystal translation must be constant, i.e. pump power and focusing conditions must remain constant.

The focused beam (13) intensity must be sufficient for nonlinear process to occur at least with several percent efficiency, to be detectable by the power meter (>10 MW/cm$^2$), but at the same time it must be at least an order of magnitude smaller than the laser induced damage threshold for the given laser radiation parameters of the investigated periodically poled crystal to avoid damage. The choice of scanning step should balance between high measurement resolution and short measurement time. With the focusing and scanning conditions for various size periodically poled crystals and lasers are outlined in Table 1 the measurement duration does not exceed 90 minutes.

The crystal poling quality "maps" can be obtained with very high resolution just by altering the scanning step in X and Y directions. Scanning step can be reduced below 1 micrometer, so for the typical 1 mm height and 10 mm wide crystal, periodic poling map can be made up from -100000 measurement points. Moreover, at each point of the X Y scan, the crystal is examined through the entire volume of the crystal. This is a big advantage compared to microscopy methods.

**Table 1**. Examples of periodically poled crystals and pump radiation parameters (experimental conditions).

| Crystal | Crystal dimension s (thickness , width, height), mm | Dimension s of a single grating (width, height), mm | Focal length of focusin g lens, mm | Pump beam diameter on crystal entranc e surface, $\mu m$ | Pump pulse energy , $\mu J$ | Pump pulse duratio n, ps | Pump wavelengt h, nm | XY scannin g matrix size, steps | XY scannin g step, $\mu m$ |
|---|---|---|---|---|---|---|---|---|---|
| 1 mm thickness PPKTP | 1×10×0.5 | 1.×1.25 | 100 | 40 | 0.007 | 0.155 | 1030 | 100×12 5 | 5×5 |
| 2 cm thickness MgO:PPL N | 20×3.8×0. 5 | 0.5×0.5 | 200 | 120 | 0.3 | 100 | 532 | 50×50 | 10×10 |
| 1 cm thickness MgO:PPL N | 10×10×0.5 | 0.5×0.5 | 250 | 150 | 90 | 500 | 1064 | 66×66 | 15×15 |
| 5 cm thickness MgO:PPL N | 50×10×1 | 1×1 | 250 | 100 | 30 | 500 | 1064 | 70×70 | 15×15 |
| 2.5 cm thickness *fan-out* MgO:PPL N | 25×12×1 | 10.75×1 | 250 | 100 | 30 | 500 | 1064 | 91×75 | 125×15 |
| 5 cm thickness MgO:PPL N | 50×11×1 | 1.57×1 | 75 | 274 | 12 | 2600 | 1064 | 105×67 | 15×15 |

**Experimental Results**

Measurement results for some crystals are listed in Table 2.

Table 2. Parameters of investigated MgO:PPLN crystals and pump radiation.

| Crystal | Manufacturer | Crystal dimensions (thickness, width, height), mm | Dimensions of a single grating (width, height), mm | Pump beam diameter on crystal entrance surface, $\mu m$ | Pump power, mW | Pump pulse duration, ps | Pump wavelength, nm | XY scanning matrix size | XY scanning step |
|---|---|---|---|---|---|---|---|---|---|
| 1 cm thickness MgO:PPLN | Manufacturer A (UK) | 10×10×0.5 | 0.5×0.5 | 150 | 90 | 500 | 1064 | 66x66 | 15x15 |
| 2 cm thickness MgO:PPLN | Manufacturer B (USA) | 20×10×1 | 1×1 (except for the 31.59 $\mu m$ grating) | 100 | 35 | 500 | 1064 | 71×71 | 10×10 |
| 5 cm thickness MgO:PPLN | Manufacturer C (Taiwan) | 50×10×1 | 1×1 | 100 | 30 | 500 | 1064 | 70×70 | 15×15 |
| 2.5 cm thickness fan-out MgO:PPLN | Manufacturer C (Taiwan) | 2.5×12×1 | 10.75×1 | 100 | 30 | 500 | 1064 | 91×75 | 125×15 |

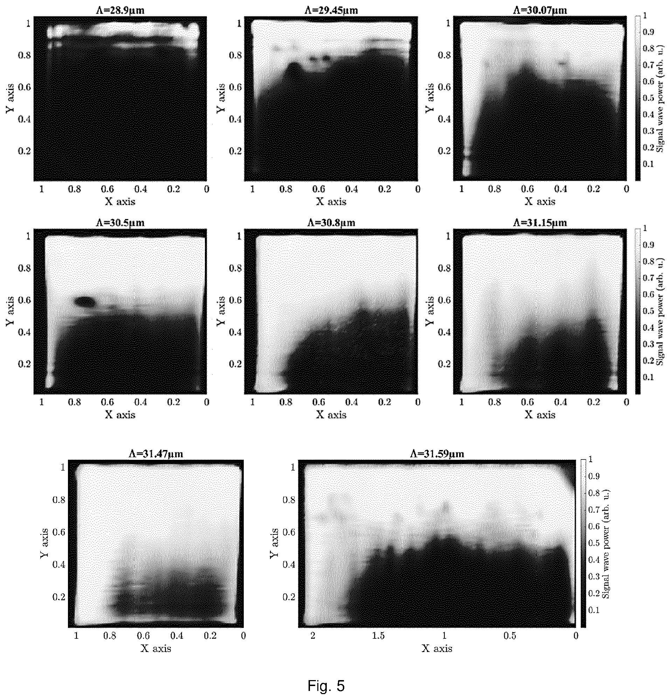

Fig.5 depicts periodic poling quality measurement results for the 2 cm thick PPLN crystal at various grating periods. The nonlinear signal in measurements was signal wave, generated during parametric generation in PPLN crystals. The color scale of each graph shows power level normalized to maximum power value separately for each colormap. This essentially shows periodic poling quality in the volume of the grating limited by the aperture point. The colormaps are depicted to match the actual crystal grating geometry (the top of the colormap corresponds to the actual top of the grating, etc.).

In the ideal case at each aperture point we should see equal signal wave power. However, the results clearly indicate signal wave power inhomogeneities in all gratings. For example, parametric light generation in $\Lambda$ = 28.9 $\mu$m grating occurs only in the top of the grating ~150 - 200 $\mu$m interval at 0.8 mm - 1 mm Y position; elsewhere parametric light generation does not occur or is very inefficient. Signal wave power distribution in transverse coordinates indirectly indicates periodic poling quality in the volume of the crystal limited by the aperture point: at points where signal wave power is close to maximum value we can claim that number of crystal poling defects, is low, domain period is constant and their duty cycle is close to optimal value of 50/50 throughout the entire crystal thickness. All these parameters are directly related to periodic poling quality. On the other hand, at points where signal wave power is low or zero, at least one of the aforementioned parameters is not optimal. We cannot indicated which of these parameters, but from the practical point of view, only the net effect is important: periodic poling quality decreases. It is also important to note that measurement were also repeated after switching the input side of the periodically poled crystal and identical results were obtained. This indicates that the aforementioned claim about periodic poling quality in the whole volume of the grating is valid: generated nonlinear signal power is influenced by poling quality in the whole volume of the crystal grating.

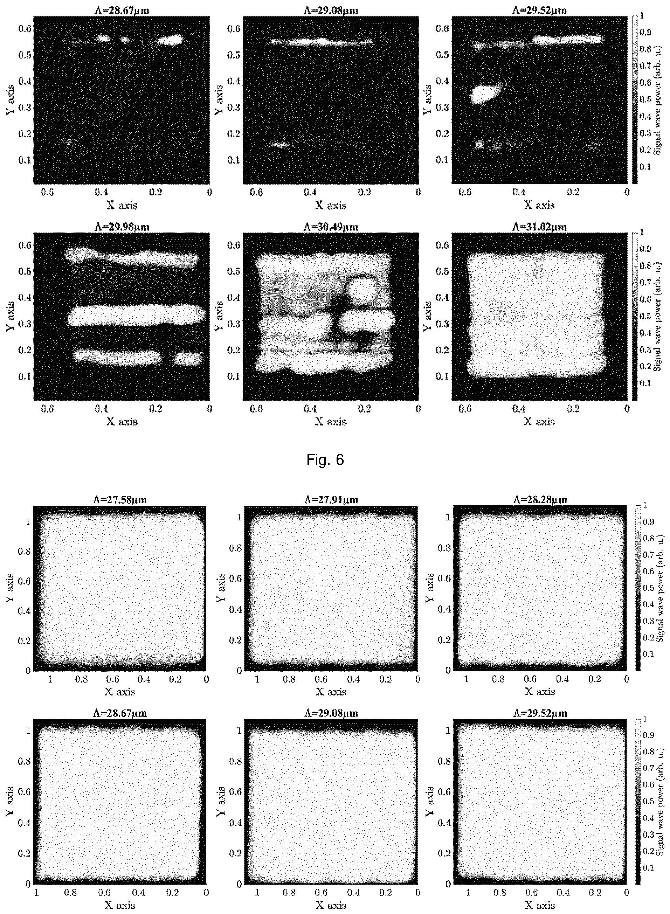

Measurement results with 1 cm thick PPLN crystal are depicted in Fig.6. For the first five PPLN crystal gratings we can see clear inhomogeneities. As in case of 2 cm thick PPLN crystal, the inhomogeneities decrease with increasing grating period. We can identify "areas" of effective parametric generation (corresponding effective periodic poling). Homogeneous and high poling quality is achieved only for the largest period ($\Lambda$ = 31, 02 $\mu$m) grating.

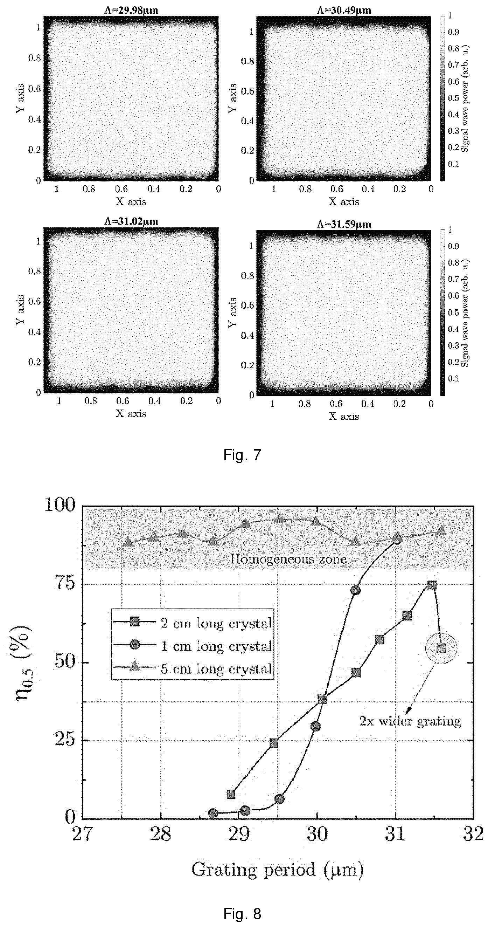

Measurements for 5 cm thick MgO:PPLN crystal are depicted in Fig.7. Unlike previous crystals, this one is manufactured recently and here we observe homogeneous signal wave power (poling quality) distribution throughout the entire crystal volume for all period gratings.

For a more comprehensive periodic poling quality evaluation we can introduce periodic poling quality parameter $\eta_{0.5}$. It is defined as ratio of crystal grating volume $V_{0.5-1}$ where nonlinear signal (signal wave in this case) average power is greater than 50% of the maximum nonlinear signal average power value in the whole grating volume Vg.

$$\eta_{0.5} = \frac{V_{0.5-1}}{V_g} . \qquad\qquad (4)$$

$\eta_{0.5}$ parameter dependence on grating period for the investigated 1 cm, 2 cm and 5 cm thick PPLN crystal is illustrated in Fig.8. For 1 cm and 2 cm thick PPLN crystals we can see a clear increase of poling quality with increasing grating period. Quality parameter values for 2 cm thick crystal range between 8% and 75%, so no grating falls within the zone of "good" poling quality gratings (defined as $\eta_{0.5} \geq 80\%$). For 2 cm thick crystal only the largest period grating has good poling quality while in the 5 cm MgO:PPLN crystal all grating have $\eta_{0.5} \geq 88\%$ so this crystal has very high poling quality.

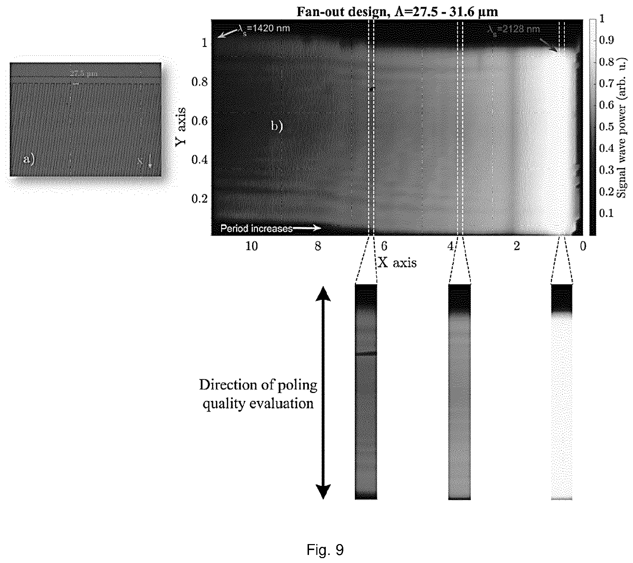

Periodic poling quality measurements for the fan-out type PPLN crystal are shown in Fig.9. These results have to be interpreted differently than previous data from multi-period periodically poled crystals. In the fan-out type periodically poled crystal there are no distinct gratings as the poling period gradually changes in the horizontal direction, so the efficiency of nonlinear interaction and generated nonlinear signal (signal wave in this case) power changes as well. On the other hand, the poling period is constant in the vertical direction. Therefore, the proposed method is still suitable for poling quality evaluation in *fan-outtype* periodically poled crystals, however, in the 2D colormap it can be performed only in the vertical direction (as shown in three zoomed-in segments in Fig.9). The current example shows that at lower grating periods there is some inhomogeneity, but it disappears at higher period segments.

The proposed method can be applied for any periodically poled crystal with any grating period provided that pump beam intensity and nonlinear interaction length is sufficient to enable nonlinear process and generate output light (second harmonic radiation, signal/idler wave, etc.). Although numerous characteristics and advantages together with structural details and features have been listed in the present description of the invention, the description is provided as an example fulfilment of the invention. Without departing from the principles of the invention, there may be changes in the details, especially in the form, size and layout, in accordance with most widely understood meanings of the concepts and definitions used in claims.

Bibliography

[1] M. Müller, E. Soergel, K. Buse, C. Langrock, and M. Fejer, "Investigation of periodically poled lithium niobate crystals by light diffraction," Journal of Applied Physics 97(4), 044102 (2005).

[2] S. Hayashi, K. Nawata, T. Taira, J.-i. Shikata, K. Kawase, and H. Minamide, "Ultrabright continuously tunable terahertz-wave generation at room temperature," Scientific reports 4(1), 1-5 (2014).

[3] S. C. Kumar, B. Nandy, and M. Ebrahim-Zadeh, "Performance studies of high-average-power picosecond optical parametric generation and amplification in MgO:PPLN at 80 MHz," Optics Express 28(26), 39189-39202 (2020).

[4] J. Banys, J. Savickytė, O. Balachninaitė, S. Armalytė, V. Tamulienė, V.Jarutis, J. Vengelis, "Performance investigation of high-efficiency widely tunable subnanosecond optical parametric generator and amplifier based on MgO:PPLN," Optics Express 30(13), 23163-23176 (2022).

[5] I. Pipinytė, J. Vengelis, V. Jarutis, M. Vengris, R. Grigonis, V. Sirutkaitis, "Investigation of continuum generation in the non-zero dispersion-shifted fiber pumped by femtosecond nanojoule pulses in 1450 - 1800 nm spectral range," Results in Physics 17, 1-9 (2020).

[6] 11. I. Pipinytė, V. Tamulienė, J. Vengelis, R. Grigonis, V. Sirutkaitis, "Temporal characteristics of a synchronously pumped optical parametric oscillator at different conditions of cavity losses," Journal of the Optical Society of America B 36(10), 2735-2743 (2019).

[7] A. Dubietis, Netiesinė optika (Vilniaus universiteto leidykla, Vilnius, 2011).

[8] B. Chen, L. Hong, C. Hu, C. Zhang, R. Liu, and Z. Li, "Engineering quadratic nonlinear photonic crystals for frequency conversion of lasers," Journal of Optics 20(3), 034009 (2018).

[9] M. Houe and P. D. Townsend, "An introduction to methods of periodic poling for second-harmonic generation," Journal of Physics D: Applied Physics 28(9), 1747 (1995).

[10] M.-J. Jin, O.-Y. Jeon, B.-J. Kim, and M. Cha, "Fabrication of periodically poled lithium niobate crystal and poling-quality evaluation by diffraction measurement," Journal of the Korean Physical Society 47(9), 336 (2005).

[11] K. Pandiyan, Y. S. Kang, H. H. Lim, B. J. Kim, and M. Cha, "Nondestructive quality evaluation of periodically poled lithium niobate crystals by diffraction," Optics Express 17(20), 17862-17867 (2009).

[12] K. Pandiyan, Y.-S. Kang, H.-H. Lim, B.-J. Kim, O. Prakash, and M.-S. Cha, "Poling quality evaluation of periodically poled lithium niobate using diffraction method," Journal of the Optical Society of Korea 12(3), 205-209 (2008).

[13] M. M. Fejer, G. Magel, D. H. Jundt, and R. L. Byer, "Quasi-phase-matched second harmonic generation: tuning and tolerances," IEEE Journal of quantum electronics 28(11), 2631-2654 (1992). [14] U. Bäder, T. Mattern, T. Bauer, J. Bartschke, M. Rahm, A. Borsutzky, and R. Wallenstein, "Pulsed nanosecond optical parametric generator based on periodically poled lithium niobate," Optics Communications 217(1-6), 375-380 (2003).

[15] F. Gao, J. Xu, B. Yan, J. Yao, B. Fu, Z. Wang, J. Qi, B. Tang, and R. A. Rupp, "Refractive index changes by electrically induced domain reversal in ac-cut slab of LiNbO3," Applied Physics Letters 87(25), 252905 (2005).

[16] H. Karlsson, M. Olson, G. Arvidsson, F. Laurell, U. Bäder, A. Borsutzky, R. Wallenstein, S. Wickström, M. Gustafsson, "Nanosecond optical parametric oscillator based on large-aperture periodically poled RbTiOAsO4," Optics Letters 24(5), 300-332 (1999).

[17] H. Karlsson, "Fabrication of periodically poled crystals from the KTP family and their applications in nonlinear optics," Doctoral dissertation. ISSN 0280-316X, Stockholm (1999).

**Claims**

1. A method for measuring periodic poling quality in nonlinear crystal using a setup comprising an optical mount for a periodically crystal, an oven for crystal heating, rotation and translation precision stages for precise crystal positioning, incoming pump laser beam, the beam focusing means, laser radiation from the crystal generated via nonlinear interaction laser radiation, optical filter for removing remaining pump radiation; optical power meter, general purpose computer for data acquisition, processing and display wherein the method comprises the following steps:

   - providing a periodically poled crystal (1) in the optical mount (2) having heat insulation and maintaining constant temperature within 1 degree Celsius accuracy of the crystal (1);
   - heating the optical mount (2) with the periodically poled crystal (1) using the underneath positioned oven (3);
   - providing the pump laser beam (13) on the crystal (1) surface, where the laser beam (13) diameter and power are sufficient to generate light for the chosen nonlinear interaction, but not exceeding laser induced damage threshold of the investigated periodically poled crystal (1);
   - focusing pump laser beam (13) into the investigated periodically poled crystal (1) using beam (13) focusing means (14);
   - determining aperture limits of a single crystal grating, which are grating edges where nonlinear process no longer occurs are determined;
   - selecting a scanning step in the defined area as determined by aperture limits of a single crystal grating for both scanning directions, perpendicular to the pump beam propagation direction, in such a way that it would be smaller than the focused beam (13) diameter and adjacent scanning points would partially overlap >50%;

- translating the periodically poled crystal (1) at periods equal or less than periods of poling of the periodically poled crystal in both directions (7) and (10) perpendicular to the pump beam (13) propagation direction using precision translation stages (8) and (12).

- measuring at each scanning matrix point average power of light generated during the nonlinear process, e.g., second harmonic generation or optical parametric generation, using a power meter. Repeating the measurements for each different period ($\Lambda$) grating and average power and then normalizing to maximum value in each grating.

- quantitatively evaluating the periodic poling quality at the crystal (1) aperture point where the measurement is performed by calculating the ratio between maximum power of radiation from the crystal (1) generated via the nonlinear interaction in the crystal (1) grating and power of radiation generated via the nonlinear interaction in the crystal (1) aperture point where the measurement is performed;

- processing the obtained data, where each scanning matrix point is normalized to maximum nonlinear process light output power

- forming a 2D intensity map representing homogeneity of poling of the periodically poled crystal grating.

2. A method for measuring periodic poling quality in nonlinear crystal according to claim 1 where the periodically poled crystal (1) is translated in both directions perpendicular to the pump beam (13) propagation direction at periods less than 10 micrometers.

3. A method for measuring periodic poling quality in nonlinear crystal according to claim 1 where the periodically poled crystal (1) is translated in both directions perpendicular to the pump beam (13) propagation direction at periods less than 1 micrometer.

4. A method according to any of the previous claims, wherein the nonlinear crystal is a fan-out type periodically poled crystal.

Fig. 1

Fig. 2

Fig. 3

Fig. 4a

Fig. 4b

Fig. 5

Fig. 6

Fig. 7

Fig. 8

Fig. 9

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Sheng Yan ET AL: "Three-dimensional ferroelectric domain visualization b Cerenkov-type second harmonic generation", IEEE J. Quantum Electron. Science Phys. Rev. Lett. Phys. Rev. Lett. Nat. Photonics Phys. Rev. Lett. Phys. Rev. Lett. Opt. Lett. Appl. Phys. Lett. Electron. Lett. Physical Review Phys. Rev. Lett. New J. Phys. 15. E. Soergel Appl. Phys. Phys. Solid Sta, 1 January 1992 (1992-01-01), pages 2631-2654, XP093032540, Retrieved from the Internet: URL:https://opg.optica.org/directpdfaccess /9a375119-bf42-4ead-90fd6b905d53f403_20398 5/oe-18-16-16539.pdf?da=1&id=203985&seq=0& mobile=no [retrieved on 2023-03-17] * the whole document * | 1-4 | INV. G02F1/355 |
| A | KH KITAEVA G ET AL: "Mapping of periodically poled crystals via spontaneous parametric down-conversion", APPLIED PHYSICS B ; LASERS AND OPTICS, SPRINGER, BERLIN, DE, vol. 81, no. 5, 1 September 2005 (2005-09-01), pages 645-650, XP019337520, ISSN: 1432-0649, DOI: 10.1007/S00340-005-1923-1 * the whole document * | 1-4 | TECHNICAL FIELDS SEARCHED (IPC) G02F |

−/−−

The present search report has been drawn up for all claims

| Place of search | Date of completion of the search | Examiner |
|---|---|---|
| The Hague | 23 March 2023 | Beugin, Anne |

EPO FORM 1503 03.82 (P04C01)

Europäisches
Patentamt

European
Patent Office

Office européen
des brevets

# EUROPEAN SEARCH REPORT

Application Number

EP 22 20 4506

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | MÜLLER M ET AL: "Investigation of periodically poled lithium niobate crystals by light diffraction", JOURNAL OF APPLIED PHYSICS, AMERICAN INSTITUTE OF PHYSICS, 2 HUNTINGTON QUADRANGLE, MELVILLE, NY 11747, vol. 97, no. 4, 20 January 2005 (2005-01-20), pages 44102-044102, XP012070680, ISSN: 0021-8979 * the whole document * | 1-4 | |
| Y,D | HOUE M ET AL: "AN INTRODUCTION TO METHODS OF PERIODIC POLING FOR SECOND-HARMONIC GENERATION", JOURNAL OF PHYSICS D: APPLIED PHYSICS, INSTITUTE OF PHYSICS PUBLISHING, BRISTOL, GB, vol. 28, no. 9, 14 September 1995 (1995-09-14), pages 1747-1763, XP000528769, ISSN: 0022-3727, DOI: 10.1088/0022-3727/28/9/001 * the whole document * | 1-4 | |
| A | DATABASE INSPEC [Online] THE INSTITUTION OF ELECTRICAL ENGINEERS, STEVENAGE, GB; 28 September 2009 (2009-09-28), PANDIYAN K ET AL: "Nondestructive quality evaluation of periodically poled lithium niobate crystals by diffraction", XP002808865, Database accession no. 11378791 * abstract * | 1-4 | TECHNICAL FIELDS SEARCHED (IPC) |

-/--

The present search report has been drawn up for all claims

| Place of search | Date of completion of the search | Examiner |
|---|---|---|
| The Hague | 23 March 2023 | Beugin, Anne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

Europäisches
Patentamt

European
Patent Office

Office européen
des brevets

# EUROPEAN SEARCH REPORT

Application Number

EP 22 20 4506

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | -& PANDIYAN K ET AL: "Nondestructive quality evaluation of periodically poled lithium niobate crystals by diffraction", OPTICS EXPRESS OPTICAL SOCIETY OF AMERICA USA, vol. 17, no. 20, 28 September 2009 (2009-09-28), pages 17862-17867, XP002809063, ISSN: 1094-4087 * the whole document * ----- | | |

TECHNICAL FIELDS
SEARCHED      (IPC)

The present search report has been drawn up for all claims

| Place of search | Date of completion of the search | Examiner |
|---|---|---|
| The Hague | 23 March 2023 | Beugin, Anne |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...............................................................................
& : member of the same patent family, corresponding
    document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. MÜLLER ; E. SOERGEL ; K. BUSE ; C. LANGROCK ; M. FEJER.** Investigation of periodically poled lithium niobate crystals by light diffraction. *Journal of Applied Physics,* 2005, vol. 97 (4), 044102
- **S. HAYASHI ; K. NAWATA ; T. TAIRA ; J.-I. SHIKATA ; K. KAWASE ; H. MINAMIDE.** Ultrabright continuously tunable terahertz-wave generation at room temperature. *Scientific reports,* 2014, vol. 4 (1), 1-5
- **S. C. KUMAR ; B. NANDY ; M. EBRAHIM-ZADEH.** Performance studies of high-average-power picosecond optical parametric generation and amplification in MgO:PPLN at 80 MHz. *Optics Express,* 2020, vol. 28 (26), 39189-39202
- **J. BANYS ; J. SAVICKY ; O. BALACHNINAI ; S. ARMALY ; V. TAMULIE ; V.JARUTIS ; J. VENGELIS.** Performance investigation of high-efficiency widely tunable subnanosecond optical parametric generator and amplifier based on MgO:PPLN. *Optics Express,* 2022, vol. 30 (13), 23163-23176
- **J. VENGELIS ; V. JARUTIS ; M. VENGRIS ; R. GRIGONIS ; V. SIRUTKAITIS.** Investigation of continuum generation in the non-zero dispersion-shifted fiber pumped by femtosecond nanojoule pulses in 1450 - 1800 nm spectral range. *Results in Physics,* 2020, vol. 17, 1-9
- **B. CHEN ; L. HONG ; C. HU ; C. ZHANG ; R. LIU ; Z. LI.** Engineering quadratic nonlinear photonic crystals for frequency conversion of lasers. *Journal of Optics,* 2018, vol. 20 (3), 034009
- **M. HOUE ; P. D. TOWNSEND.** An introduction to methods of periodic poling for second-harmonic generation. *Journal of Physics D: Applied Physics,* 1995, vol. 28 (9), 1747

- **M.-J. JIN ; O.-Y. JEON ; B.-J. KIM ; M. CHA.** Fabrication of periodically poled lithium niobate crystal and poling-quality evaluation by diffraction measurement. *Journal of the Korean Physical Society,* 2005, vol. 47 (9), 336
- **K. PANDIYAN ; Y. S. KANG ; H. H. LIM ; B. J. KIM ; M. CHA.** Nondestructive quality evaluation of periodically poled lithium niobate crystals by diffraction. *Optics Express,* 2009, vol. 17 (20), 17862-17867
- **K. PANDIYAN ; Y.-S. KANG ; H.-H. LIM ; B.-J. KIM ; O. PRAKASH ; M.-S. CHA.** Poling quality evaluation of periodically poled lithium niobate using diffraction method. *Journal of the Optical Society of Korea,* 2008, vol. 12 (3), 205-209
- **M. M. FEJER ; G. MAGEL ; D. H. JUNDT ; R. L. BYER.** Quasi-phase-matched second harmonic generation: tuning and tolerances. *IEEE Journal of quantum electronics,* 1992, vol. 28 (11), 2631-2654
- **U. BÄDER ; T. MATTERN ; T. BAUER ; J. BARTSCHKE ; M. RAHM ; A. BORSUTZKY ; R. WALLENSTEIN.** Pulsed nanosecond optical parametric generator based on periodically poled lithium niobate. *Optics Communications,* 2003, vol. 217 (1-6), 375-380
- **F. GAO ; J. XU ; B. YAN ; J. YAO ; B. FU ; Z. WANG ; J. QI ; B. TANG ; R. A. RUPP.** Refractive index changes by electrically induced domain reversal in ac-cut slab of LiNbO. *Applied Physics Letters,* 2005, vol. 87 (25), 252905
- **H. KARLSSON ; M. OLSON ; G. ARVIDSSON ; F. LAURELL ; U. BÄDER ; A. BORSUTZKY ; R. WALLENSTEIN ; S. WICKSTRÖM ; M. GUSTAFSSON.** Nanosecond optical parametric oscillator based on large-aperture periodically poled RbTiOAsO. *Optics Letters,* 1999, vol. 24 (5), 300-332
- **H. KARLSSON.** Fabrication of periodically poled crystals from the KTP family and their applications in nonlinear optics. *Doctoral dissertation,* 1999, ISSN 0280-316X